# FASCICULE DE BREVET EUROPEEN

(11) **EP 0 834 255 B1**
(45) Date de publication et mention de la délivrance du brevet: **25.06.2003**
(21) Numéro de dépôt: 96202769.4
(22) Date de dépôt: 04.10.1996
(51) Int. Cl.: A23C 1/12, A23C 9/156

(54) **Procédé de fabrication d'un agent d'aromatisation pour boisson**
Verfahren zur Herstellung eines Geschmackstoffes für Getränke
Process for preparing a flavouring agent for beverages

(43) Date de publication de la demande: 08.04.1998
(73) Titulaire: SOCIETE DES PRODUITS NESTLE S.A., 1800 Vevey (CH)
(72) Inventeur: Meister, Niklaus, 3506 Grosshoechstetten (CH); Vikas, Martin, 3510 Konolfingen (CH)
(74) Mandataire: Archambault, Jean

(56) Documents cités:
- EP-A- 0 517 941
- EP-A- 0 616 774
- EP-A- 0 627 169
- DE-A- 3 726 487
- DE-A- 4 434 400
- FR-A- 2 665 056
- US-A- 3 119 702
- US-A- 3 126 283
- DATABASE WPI Week 8245 Derwent Publications Ltd., London, GB; AN 82-97079e XP002023816 & SU 897 198 A (DAIRY IND RES INST) , 15 Janvier 1982
- THE MILK INDUSTRY, vol. 67, no. 5, 1 Janvier 1970, pages 24-26, XP000560919 LANG F ET AL: "A STUDY OF THE MANUFACTURE AND PACKAGING OF DAIRY SPECIALITIES IN FRANCE"

## Description

L'invention concerne la fabrication d'un agent d'aromatisation pour boisson, notamment de café ou de thé.

On connaît, par exemple de DE-A-4434400, un lait condensé aromatisé emballé en portions dont le but est de servir d'agent de blanchiment et d'aromatisation d'une boisson de type café ou thé. Dans une version non sucrée, on prépare un tel produit en concentrant par évaporation un lait dont on a ajusté la teneur en matière grasse, en y ajoutant un concentré d'arôme, en l'homogénéisant, en le stérilisant en ligne et en le conditionnant en portions de manière aseptique. Pour préparer une version sucrée, on mélange le lait standardisé en matière grasse avec un sirop de sucre, on le concentre par évaporation, on y ajoute un concentré d'arôme, on l'homogénéise, on l'ensemence en lactose, puis on l'emballe, ces opérations ne différant pas d'une préparation classique de lait concentré sucré dont la teneur élevée en sucre permet sa conservation.

Le but de l'invention est de fabriquer un agent d'aromatisation à base de lait pour boisson, notamment café ou thé, se présentant en portions et de longue conservation, à fort pouvoir d'aromatisation.

Le procédé selon l'invention, dans lequel on prépare une base lactique par mélange de matière grasse lactique et de lait écrémé de manière à obtenir la teneur en matière grasse désirée, homogénéisation poussée du mélange, standardisation, concentration du mélange par évaporation, refroidissement, standardisation, préchauffage, traitement thermique par UHT, homogénéisation aseptique et remplissage aseptique, est caractérisé par le fait que l'on ajoute à la base lactique un sel de stabilisation, un sucre et un arôme avant ou après l'évaporation.

Pour mettre en oeuvre le procédé, on standardise la base lactique, c'est à dire que l'on ajuste les quantités pondérales respectives de matière grasse et de solides non gras aux valeurs désirées par addition, selon les besoins, par exemple de lait écrémé, de crème ou de matière grasse lactique anhydre. De préférence, on standardise un mélange de lait écrémé pasteurisé et de crème pasteurisée ou de matière grasse lactique anhydre pour obtenir la teneur en matière grasse désirée, de préférence environ 15 %, on préchauffe le mélange à 50 - 100° C, puis on l'homogénéise dans des conditions poussées.

Le but de l'homogénéisation est d'augmenter la stabilité physique du mélange pour éviter une séparation des phases lors du traitement ultérieur et à l'entreposage du produit final, par augmentation de la surface des globules gras de manière à mieux lier les protéines et compenser ainsi l'insuffisance relative des lipides membranaires. Par homogénéisation poussée, on entend que le mélange est traité en un ou plusieurs passages dans un homogénéisateur à un ou plusieurs étages à des pressions allant de 50 à 500 bar, de préférence en un passage dans un étage à environ 300 bar.

Ce traitement de la crème est souhaitable pour certaines aromatisations et a pour but de prévenir la séparation de graisse pendant l'entreposage.

Ensuite, on standardise la base lactique avec du lait écrémé pasteurisé pour avoir le rapport pondéral matière grasse/solides non gras désiré, de préférence environ 0, 23-0,24.

On traite ensuite l'homogénéisat thermiquement de manière à stabiliser les liaisons entre les protéines, de sorte qu'elles subsistent après la concentration par évaporation. Ce traitement thermique peut avoir lieu par chauffage direct ou indirect dans tout appareil usuel permettant de maintenir le liquide à 80-150° C pendant 1 à 1200 s. Bien entendu, la limite supérieure de température correspond à la limite inférieure de la durée. On peut ainsi par exemple combiner un échangeur à plaques avec un tube d'attente et une vanne de contre-pression réglée, deux échangeurs à plaques reliés par un tube d'attente ou encore un échangeur à plaques associé à une vanne de contre-pression réglée et à une cuve d'attente thermostatisée.

Après ce traitement thermique, on concentre le liquide par évaporation avec expansion dans un évaporateur à flot tombant à simple ou, de préférence à multiple effet à une teneur en matière sèche de 30 à 40 % et de préférence de 33 à 37 % en poids.

Si le sucre est ajouté avant l'évaporation, on concentre alors à une teneur en matière sèche > 55 %, de préférence d'environ 60 % en poids.

Une fois concentré, le liquide est de préférence de nouveau homogénéisé, de préférence en un passage dans un homogénéisateur à un étage à environ 250 bar. Le but de cette seconde homogénéisation est de désintégrer les agglomérats de globules gras qui pourraient s'être formé durant l'étape de concentration par évaporation et le cas échéant de réduire encore la taille de ces globules gras.

On refroidit de préférence le concentrat homogénéisé à une température < 10° C. On y ajoute alors un sel de stabilisation qui peut être choisi parmi les phosphates et les citrates, par exemple à raison de 0,05 à 0,35 % en poids, un arôme ainsi qu'un sucre, sous forme sèche. La quantité de saccharose peut être 5 - 40 % des matières séches du produit final et correspond de préférence à environ la moitié celle que l'on trouve habituellement dans un lait concentré sucré, soit environ 30 % des matières sèches du produit final.

Comme arôme, on peut utiliser par exemple toute poudre ou concentré d'arôme sur support lipidique, aqueux, alcoolique, liquoreux ou un mélange de ces diluents. Les arômes de choix sont le chocolat, le cacao, la vanille, l'orange, la chataîgne, la cannelle, l'amande (Amaretto), la crème Bailey, la crème de whisky, pour ne citer que quelques exemples. La quantité d'arôme mise en oeuvre peut représenter, selon sa nature, de préférence 0,05 à 5 % en poids des matières sèches du produit final.

Lors de ce mélange, les proportions sont choisies de sorte que les solides de lait représentent environ 20 à 25 % du produit final.

On procède enfin à la stérilisation de la base lactique aromatisée. On effectue le traitement thermique en ligne par UHT. Pour ce faire, on préchauffe le liquide à 50-90° C, on le stérilise en ligne par chauffage direct ou indirect, de préférence à 120-145° C pendant quelques s. à quelques min., la limite supérieure de la température correspondant à la limite inférieur de la durée. On refroidit ensuite le produit à 50-90° C, par exemple par détente flash, puis on l'homogénéise, en un ou plusieurs passages et un ou deux étages, de préférence en un passage à 200-250 bar au premier étage, puis environ 50 bar au second étage.

On le refroidit enfin à 4-30° C, de préférence à environ 20° C et on le conditionne dans des emballages en portions, par exemple des briques ou des petits pots. Toutes les opérations suivant là stérilisation s'opèrent naturellement de manière aseptique.

Selon une variante de l'addition d'arôme, applicable en particulier aux arômes thermosensibles, par exemple dilués dans l'alcool, tel que par exemple l'éthanol ou le propane diol, on opère celle-ci de manière aseptique dans la base lactique sucrée stérilisée.

Selon une variante de l'addition de sucre, celle-ci peut avoir lieu avant le préchauffage précédant le premier traitement thermique, c'est à dire avant l'étape de concentration par évaporation, auquel cas l'homogénéisation après l'évaporation n'est pas nécessaire.

Selon une variante de l'addition du sel de stabilisation, ce dernier peut être ajouté avant le préchauffage précédant le premier traitement thermique ou encore juste avant l'étape de concentration par évaporation.

Les exemples ci-après illustrent l'invention. Dans ceux-ci, les pourcentages et parties sont pondéraux, sauf indication contraire.

### Exemple 1

On standardise de la crème pasteurisée et du lait écrémé pasteurisé de manière à obtenir une base lactique à 15 % de matière grasse. Après préchauffage à 80° C, on homogénéise le liquide à cette température en un passage et un étage à 300 bar, puis on le refroidit à une température < à 10° C et on le standardise avec du lait écrémé pasteurisé à un rapport matière grasse / solides non gras d'environ 0,23 - 0,24. Après préchauffage à 75° C, on le traite thermiquement à 118° C pendant 156 s., puis on le concentre par évaporation à 33-37 % de matière sèche. Après préchauffage à 65° C, on homogénéise le concentrat en un passage à un étage à 250 bar, puis on le refroidit à une température < à 10° C.

On y ajoute alors une solution d'hydrogénophosphate disodique dans l'eau désionisée ainsi que du saccharose cristallisé et un arôme en poudre sous agitation, pendant environ 20 min. jusqu'à dissolution. Après préchauffage à 80° C, on stérilise le mélange par injection directe de vapeur à 122° C pendant 6 min., on le refroidit à 75° C par détente flash, on l'homogénéise en un passage en deux étapes, d'abord à 250 bar, puis à 50 bar, on le refroidit, puis on le conditionne dans des petits pots. Toutes les opérations suivant la stérilisation ont lieu aseptiquement.

La composition (%) des laits concentrés aromatisés obtenus est indiquée au tableau 1 ci-après.

**Tableau 1**

| **Ingrédient** | **Crème irlandaise** | **Amaretto** | **Vanille** | **Cannelle** |
|---|---|---|---|---|
| Matière grasse lactique | 4 | 4 | 4 | 4 |
| Solides non gras du lait | 17 | 17 | 17 | 17 |
| Saccharose | 30 | 30 | 30 | 30 |
| Arôme crème Bailey | 2,5 | - | - | - |
| Arôme Amaretto | - | 0,8 | - | - |
| Arôme vanille | - | - | 3 | - |
| Arôme cannelle | - | - | - | 0,08 |
| Arôme vanille | - | - | - | 0,06 |
| Na₂HPO₄ | 0,22 | 0,22 | 0,22 | 0,22 |
| Eau | 46,28 | 47,98 | 45,28 | 48,64 |

Les produits préparés selon l'invention conviennent parfaitement à l'aromatisation du café ou du thé.

### Exemple 2

On standardise de la crème pasteurisée et du lait écrémé pasteurisé de manière à obtenir une base lactique à 15 % de matière grasse. Après préchauffage à 80° C, on homogénéise le liquide à cette température en un passage et un étage à 300 bar, puis on le refroidit à une température < à 10° C et on le standardise avec du lait écrémé pasteurisé à un rapport matière grasse / solides non gras d'environ 0,23 - 0,24. On ajoute du saccharose cristallisé au liquide. Après préchauffage à 75° C, on le traite thermiquement à 120° C pendant 120 s., puis on le concentre par évaporation à > 55 % de matière sèche et on refroidit à une température < 10° C. On ajoute alors au concentrat une solution d'hydrogénophosphate disodique dans l'eau désionisée ainsi qu'un arôme en poudre sous agitation, pendant environ 20 min. jusqu'à dissolution. Après préchauffage à 80° C, on stérilise le mélange par injection directe de vapeur à 125° C pendant 6 min., on le refroidit à 75° C par détente flash, on l'homogénéise en un passage en deux étapes, d'abord à 250 bar, puis à 50 bar, on le refroidit, puis on le conditionne dans des petits pots. Toutes les opérations suivant la stérilisation ont lieu aseptiquement. Le produit obtenu a la même composition et les mêmes propriétés que celui préparé selon l'exemple 1.

## Revendications

1. Procédé de fabrication d'un agent d'aromatisation pour boisson, notamment de café ou de thé, dans lequel:
- on prépare une base lactique par mélange de matière grasse lactique et de lait écrémé de manière à obtenir la teneur en matière grasse désirée,
- on homogénéise de manière poussée le mélange, on le standardise,
- on concentre le mélange par évaporation et on le refroidit,
- on ajoute à la base lactique après concentration par évaporation, un sel de stabilisation, du saccharose à raison de 5 à 40 % en poids des matières sèches du produit final et un arôme
- on le préchauffe, on le traite thermiquement par UHT, on l'homogénéise aseptiquement et on le conditionne aseptiquement.

2. Procédé de fabrication d'un agent d'aromatisation pour boisson, notamment de café ou de thé, dans lequel:
- on prépare une base lactique par mélange de matière grasse lactique et de lait écrémé de manière à obtenir la teneur en matière grasse désirée,
- on homogénéise de manière poussée le du mélange, on le standardise,
- on ajoute à la base lactique un sel de stabilisation, un arôme et du saccharose à raison de 5 à 40 % en poids des matières sèches du produit final,
- on concentre le mélange par évaporation,
- on le refroidit,
- on le préchauffe, on le traite thermiquement par UHT, on l'homogénéise aseptiquement et on le conditionne aseptiquement.

3. Procédé selon la revendication 1 ou 2, **caractérisé par le fait que** l'on standardise la base lactique, c'est à dire que l'on ajuste les quantités pondérales respectives de matière grasse et de solides non gras aux valeurs désirées par addition, selon les besoins, de lait écrémé, de crème ou de matière grasse lactique anhydre, notamment pour avoir un rapport pondéral matière grasse/solides non gras d'environ 0,23-0,24.

4. Procédé selon la revendication 1 ou 2, **caractérisé par le fait que** l'on préchauffe le mélange, on le standardise à la teneur en matière grasse désirée, notamment environ 15 % en poids, on préchauffe le mélange à 50-100° C, puis on l'homogénéise dans des conditions poussées, le mélange étant traité en un ou plusieurs passages dans un homogénéisateur à un ou plusieurs étages à des pressions allant de 50 à 500 bar, puis on refroidit le mélange homogénéisé à une température < à 10° C et on le standardise avec du lait écrémé pasteurisé de manière à obtenir le rapport pondéral matière grasse / solides non gras désiré.

5. Procédé selon la revendication 1, **caractérisé par le fait que** l'on-homogénéisé le liquide après concentration par évaporation et avant stérilisation.

6. Procédé selon la revendication 1, **caractérisé par le fait qu'**après l'avoir refroidi, on ajoute au concentrat un sel de stabilisation choisi parmi les phosphates et les citrates, à raison de 0,05 à 0,35 % en poids, un arôme ainsi qu'un sucre, notamment du saccharose sous forme sèche et que la quantité de saccharose correspond à 5 - 40 % en poids des matières sèches du produit final, notamment à environ la moitié celle que l'on trouve habituellement dans un lait concentré sucré, soit environ 30 % des matières sèches du produit final.

7. Procédé selon la revendication 1 ou 2, **caractérisé par le fait que** l'on utilise comme arôme, toute poudre ou concentré d'arôme sur support lipidique, aqueux, alcoolique, liquoreux ou un mélange de ces diluents, notamment de chocolat, de cacao, de vanille, d'orange, de chataîgne, de cannelle, d'amande, de crème Bailey, la quantité d'arôme mise en oeuvre représentant selon sa nature, 0,05 à 5 % en poids des matières sèches du produit final.

8. Procédé selon la revendication lou 2, **caractérisé par le fait que**, les proportions composants sont choisies de sorte que les solides de lait représentent environ 20 à 25 % du produit final.

9. Procédé selon la revendication 1 ou 2, applicable en particulier aux arômes thermosensibles, **caractérisé par le fait que** l'on ajoute un arôme de manière aseptique dans la base lactique sucrée stérilisée.

10. Procédé selon la revendication 2, **caractérisé par le fait que** l'on ajoute le sel de stabilisation juste avant l'étape de concentration par évaporation.

## Patentansprüche

1. Verfahren zur Herstellung eines Aromamittels für ein Getränk, insbesondere Kaffee oder Tee, bei dem man:
- durch Mischen von Milchfett und entrahmter Milch eine Milchbasis so herstellt, daß man den gewünschten Fettgehalt erhält,
- die Mischung intensiv homogenisiert, sie standardisiert,
- die Mischung durch Eindampfen konzentriert und sie kühlt,
- der Milchbasis nach der Konzentration durch Eindampfen ein Stabilisierungssalz, Saccharose in einer Menge von 5 bis 40 % vom Gewicht der Trockenmasse des Endprodukts und ein Aroma zusetzt,
- sie vorerhitzt, sie thermisch UHT-behandelt, sie keimfrei homogenisiert und sie keimfrei verpackt.

2. Verfahren zur Herstellung eines Aromamittels für ein Getränk, insbesondere Kaffee oder Tee, bei dem man:
- durch Mischen von Milchfett und entrahmter Milch eine Milchbasis so herstellt, daß man den gewünschten Fettgehalt erhält,
- die Mischung intensiv homogenisiert, sie standardisiert,
- der Milchbasis ein Stabilisierungssalz, ein Aroma und Saccharose in einer Menge von 5 bis 40% vom Gewicht der Trokkenmasse des Endprodukts zusetzt,
- die Mischung durch Eindampfen konzentriert,
- sie kühlt,
- sie vorerhitzt, sie thermisch UHT-behandelt, sie keimfrei homogenisiert und sie keimfrei verpackt.

3. Verfahren nach Anspruch 1 oder 2, **dadurch gekennzeichnet, daß** man die Milchbasis standardisiert, d.h. daß man die jeweiligen Gewichtsmengen von Fett und Nichtfett-Feststoffen durch Zusatz von entrahmter Milch, Rahm oder wasserfreiem Milchfett je nach Bedarf auf die gewünschten Werte einstellt, um insbesondere ein Gewichtsverhältnis Fett/Nichtfett-Feststoffe von etwa 0,23 - 0,24 zu erhalten.

4. Verfahren nach Anspruch 1 oder 2, **dadurch gekennzeichnet, daß** man die Mischung vorerhitzt, sie auf den gewünschten Fettgehalt, und zwar insbesondere auf etwa 15 Gew.-%, standardisiert, die Mischung auf 50-100°C vorerhitzt, sie dann bei strengen Bedingungen homogenisiert, wobei die Mischung in einem Homogenisiergerät in einem oder in mehreren Durchgängen mit Drücken von 50 bis 500 bar behandelt wird, dann die Mischung auf eine Temperatur < 10°C kühlt und mit pasteurisierter entrahmter Milch so standardisiert, daß man das gewünschte Gewichtsverhältnis Fett/Nichtfett-Feststoffe erhält.

5. Verfahren nach Anspruch 1, **dadurch gekennzeichnet, daß** man die Flüssigkeit nach der Konzentration durch Eindampfen und vor der Keimfreimachung homogenisiert.

6. Verfahren nach Anspruch 1, **dadurch gekennzeichnet, daß** man dem Konzentrat nach dem Abkühlen ein Stabilisierungssalz, das aus Phosphaten und Citraten ausgewählt ist, in einer Menge von 0,05 bis 0,35 Gew.-%, ein Aroma sowie einen Zucker, insbesondere Saccharose in trockener Form, zusetzt und daß die Menge an Saccharose 5 - 40 % vom Gewicht der Trockenmasse des Endprodukts entspricht, und zwar insbesondere ungefähr der Hälfte von der Menge, die man gewöhnlich in einer gezuckerten konzentrierten Milch vorfindet, d.h. etwa 30% vom Trockengewicht des Endprodukts.

7. Verfahren nach Anspruch 1 oder 2, **dadurch gekennzeichnet, daß** man als Aroma jedes Aromapulver oder -konzentrat auf lipidischem, wässrigen, alkoholischem, likörartigem Träger oder einer Mischung dieser Verdünnungsmittel insbesondere von Schokolade, Kakao, Vanille, Orange, Kastanie, Zimt, Mandeln, Bailey's-Creme verwendet, wobei die eingesetzte Menge an Aroma je nach seiner Natur 0,05 bis 5 % vom Gewicht der Trockenmasse des Endprodukts darstellt.

8. Verfahren nach Anspruch 1 oder 2, **dadurch gekennzeichnet, daß** die Anteile der Bestandteile so gewählt sind, daß die Milchfeststoffe etwa 20 bis 25 % vom Endprodukt darstellen.

9. Verfahren nach Anspruch 1 oder 2, das insbesondere auf wärmeempfindliche Aromastoffe anwendbar ist, **dadurch gekennzeichnet, daß** man ein Aroma in der keimfrei gemachten gezuckerten Milchbasis keimfrei zusetzt.

10. Verfahren nach Anspruch 2, **dadurch gekennzeichnet, daß** man das Stabilisierungssalz gerade vor dem Schritt der Konzentration durch Eindampfen zusetzt.

## Claims

1. Process for manufacturing a flavouring agent for a beverage, in particular coffee or tea, in which:
- a milk base is prepared by mixing milk fats and skimmed milk so as to obtain the desired fat content,
- the mixture is thoroughly homogenized and standardized,
- the mixture is concentrated by evaporation and is cooled,
- a stabilizing salt, sucrose in an amount of 5 to 40 weight % of the dry matter of the final product and a flavouring are added to the milk base following concentration by evaporation,
- the mixture is pre-heated, heat-treated by UHT, homogenized aseptically and packaged aseptically.

2. Process for manufacturing a flavouring agent for a beverage, in particular coffee or tea, in which:
- a milk base is prepared by mixing milk fats and skimmed milk so as to obtain the desired fat content,
- the mixture is thoroughly homogenized and standardized,
- a stabilizing salt, a flavouring and sucrose in an amount of 5 to 40 weight % of the dry matter of the final product, are added to the milk base,
- the mixture is concentrated by evaporation,
- it is cooled,
- it is preheated, heat-treated by UHT, homogenized aseptically and packaged aseptically.

3. Process according to claim 1 or 2, **characterized in that** the milk base is standardized, that is to say the respective quantities by weight of the fats and non-fat solids are adjusted to the desired values by adding, according to requirements, skimmed milk, cream or anhydrous milk fats so as to have in particular a weight ratio of fats to non-fat solids of approximately 0.23-0.24.

4. Process according to claim 1 or 2, **characterized in that** the mixture is preheated and standardized to the desired fat content, in particular approximately 15 weight %, the mixture is preheated to 50-100°C and is then homogenized under intensive conditions, the mixture being processed in one or more passes through a homogenizer with one or more stages at pressures of 50 to 500 bar, the homogenized mixture is then cooled to a temperature < 10°C and is standardized with pasteurized skimmed milk so as to obtain the desired weight ratio of fats to non-fat solids.

5. Process according to claim 1, **characterized in that** the liquid is homogenized after concentration by evaporation and before sterilization.

6. Process according to claim 1, **characterized in that** after having cooled the concentrate, a stabilizing salt is added selected from phosphates and citrates, at a rate of 0.05 to 0.35 weight %, as well as a flavouring and a sugar, in particular sucrose in dry form, and **in that** the quantity of sucrose corresponds to 5-40 weight % of the dry matter of the final product, in particular to approximately half of that usually found in a sweetened concentrated milk, namely approximately 30 % of the dry matter of the final product.

7. Process according to claim 1 or 2, **characterized in that**, as flavouring, any flavouring powder or concentrate is used on a lipidic, aqueous, alcoholic, or liqueur type support or a mixture of these diluents, in particular chocolate, cocoa, vanilla, orange, chestnut, cinnamon, almond or Baileys cream, the quantity of flavouring used representing, according to its nature, 0.05 to 5 weight % of the dry matter of the final product.

8. Process according to claim 1 or 2, **characterized in that** the proportions of components are selected so that the milk solids represent approximately 20 to 25 % of the final product.

9. Process according to claim 1 or 2, applicable in particular to heat-sensitive flavourings, **characterized in that** a flavouring is added in an aseptic manner to the sterilized sweetened milk base.

10. Process according to claim 2, **characterized in that** the stabilizing salt is added just before the concentration step by evaporation.
